# EUROPEAN PATENT APPLICATION

(11) **EP 1 048 541 A1**
(43) Date of publication of application: **02.11.2000**
(21) Application number: 00201308.4
(22) Date of filing: 11.04.2000
(51) Int. Cl.: B60T 17/00, B01D 53/26

(54) **Air desiccant canister**

(30) Priority: 28.04.1999 US 131462 P; 15.03.2000 US 525793
(71) Applicant: Baldwin Filters, Inc., Kearney, Nebraska 68847-0610 (US)
(72) Inventor: Strope, Claude F., Kearney, Nebraska 68845 (US); Biere, David A., Kearney, Nebraska 68845 (US); Brown, Gene W., Kearney, Nebraska 68845 (US)
(74) Representative: Meyers, Ernest

(57) **Abstract**

A desiccant filter of the spin-on type is provided with an aluminium cast baseplate (30) which has an aperture formed therein for receiving a pressure relief valve (96). The baseplate (30) is secured to a sheet steel canister (20) by a hemming connection which folds the end of the canister (20) around the rim of the baseplate (30). The inlet port (48) for receiving wetter air and the outlet port (46) for returning drier air are located in the baseplate (30). The inlet port (48) may be located inside the outlet port (46) or alternatively the outlet ports (46) may be located inside the inlet ports (48). A relief valve (96) is mounted in the aperture of the baseplate (30) to relieve excessive pressure build up in the filter and the air braking system. The pressure relief valve (96) includes a valve body (106), a compression spring (102) and a plunger (104). The valve body (106) includes an opening (116) and the plunger (104) includes plug (120) which extends into the opening (116) to prevent formation of a deposit area where water and other contaminants may be deposited. Regardless of whether the outlet port (46) is located inside the inlet ports (48) or likewise the reverse, the pressure relief valve (96) is always located in a position where it receives relatively dry air thereby better preventing the possibility of oil and water from freezing in the relief valve. The desiccant bed is compressed in a way that minimizes the amount of gaps between pellets and also minimizes the amount of rubbing between pellets thereby reducing the amount of desiccant dust produced.

## Description

This invention relates to desiccant dryers, and more particularly to a spin-on canister-type desiccant dryer.

Desiccant dryers have an important use in connection with pneumatic braking systems such as used in over-the-road trucks. Such trucks have an onboard compressor which is operated periodically to keep an air pressure tank charged at a desired operating level, so that the pressure is available to assist braking. It is important that water be kept out of the compressed air, because if it is not, the moisture will ultimately collect on and corrode the control and operating elements in the braking system and provides the potential to freeze inside air lines and control mechanisms. Desiccant dryers have been used to remove the water from the compressed air. Periodically compressed air is directed in the reverse direction through the desiccant dryer in order to dry the desiccant beads and prepare them to remove further water from the compressed air.

One of the features which must be kept in mind when designing or working with compressed air systems and desiccant dryers for those systems, is the magnitude of damage a structural failure can cause. There is a tremendous amount of energy stored in compressed air, and indeed it is the primary reason why compressed air is used as a working fluid in braking systems. But a weak link in compressed air systems can lead to failures which in turn can be catastrophic.

Modernly there have been two approaches used for supplying desiccant dryers for truck braking systems. One relies on a desiccant cartridge which is inserted into a permanent, non-replaceable housing. The housing can be a cast member, or otherwise be made structurally sound. The problem with such systems is, however that alternative supplies of replacement cartridges can lead to the introduction into the systems of inferior replacement parts, compromising the overall performance of the system and perhaps damaging the elements intended to be protected. More importantly, maintenance time to replace the desiccant cartridge is rather high.

Spin-on canisters are the other form of desiccant dryers in use today. The spin-on approach is useful in assuring that the canister is an intended fit for the system, but spin-on canisters also have a number of problems. Some are not unique to the spin-on approach, and also apply to the cartridge approach.

Dusting is one of the problems. In systems in which the airflow is reversed to dry the desiccant beads, the beads can rub against each other, create open spaces, and ultimately create dust which can be drawn into the braking system with harmful effects. It should be noted at this point that the term desiccant as used herein includes the term molecular sieves and other equivalent moisture removing materials.

The canister itself, and the seam which joins the canister to the base plate can also be a problem. Truck braking systems operate at a designed pressure, but there are instances where through failure or malfunction the pressure can rise beyond design limits. Pulsation in the system also creates shock loading. The typical seamed connection between the canister and the base plate is capable of withstanding many of those loads, but it can be a source of failure.

Desiccant canisters have typically utilized a stamped steel base plate. Under high-pressure conditions (within the canister) the base plate deflects slightly. That can cause the system gasket (between the base plate and the air brake system) to begin to extrude out of its gasket retainer recess, causing a failure at that location.

Pressure relief valves have been associated with such systems, but in the past primarily with the associated dryer mounting base of the air brake system to which the desiccant dryer mounts. The problem with pressure relief systems is that the trucks are intended to operate in a wide range of atmospheric environments, including very hot to sub-zero. It is not unusual to have water or resulting ice and other contaminants in the system interfere with the operation of a relief valve. Furthermore, to the extent that another component is relied on for pressure relief in a canister, the canister itself may be at risk, due to the indirect nature of the pressure relief provided for it.

In view of the foregoing, it is a general aim of the present invention to provide a spin-on desiccant canister having a reliable internal pressure relief mechanism with sufficient adaptability that the base design can be utilized for a variety of different configurations.

A more particular object is to provide a desiccant canister in which a pressure relief valve is associated with a simplified base plate so that it directly monitors the pressure within the canister and relieves the pressure when it rises above a predesigned level.

In accordance with the present invention these objectives are achieved by a spin-on desiccant canister for an air brake system according to claim 1.

Such a canister enables to simplify the construction of the base plate and to provide a protected area for mounting a pressure relief valve in a desiccant canister.

There is provided a substantially rigid base plate which minimizes the problem of deflection of the base plate, yet provides a protected area for the pressure relief valve.

There is provided a desiccant canister having a relief valve which is configured to minimize the impact of environmental conditions on the operability of the relief valve.

The system is reconfigured so that the air supply applied to the pressure relief valve is the dried supply from the outlet, rather than the wet supply at the inlet.

It is a feature of the invention that a cast base plate, preferably aluminium, has an aperture formed therein for receiving a pressure relief valve. Outboard of the aperture is a rim adapted to accept a hemmed connection with the external housing canister. Forming of the rim outside of the area occupied by the pressure relief valve frees that area (as compared to prior systems which used a stamped base plate to which a seaming lid is welded) so that the outlet aperture for the pressure relief valve is in a protected area. In addition, the pressure relief mechanism is located internal to the external canister to the cast base plate to reduce exposure to outside elements. A further feature of this arrangement is the fact of a reliable hemmed connection between the canister and the base plate, and the optimization of base plate deflection which controls the possibility of extruding the gasket out of its retention slot in the base plate.

A further feature of the system of the invention is that it is customizable. For braking systems in which inlet air flows through the central port and out the peripheral ports, the pressure relief valve is directly on the dry air side of the system, and thus protected from certain aspects of the environment. In trucking systems where the flow is the opposite direction, simple port changes in the base plate isolate the pressure relief valve in the dry air (central) portion of the system.

A single air pass system may also be utilized through a large volume of desiccant beads, with one pass being outside of an internal canister, and the second pass being through the beads in the canister. The beads are retained in the internal container under a spring bias load so that any reduction in overall volume of the beads (as by rearranging or packing) is accommodated for by a movable pressure loaded closure, to avoid the creation of gaps or spaces between the beads.

Other objects and advantages of the invention will become more apparent from the following detailed description when taken in conjunction with the accompanying drawings.
Figure 1 is a perspective view of a desiccant canister according to a first embodiment of the present invention.
Figure 2 is a cross-sectional view of figure 1 taken substantially about line 2-2.
Figure 3 is an enlarged fragmentary cross-sectional view of a portion of figure 2.

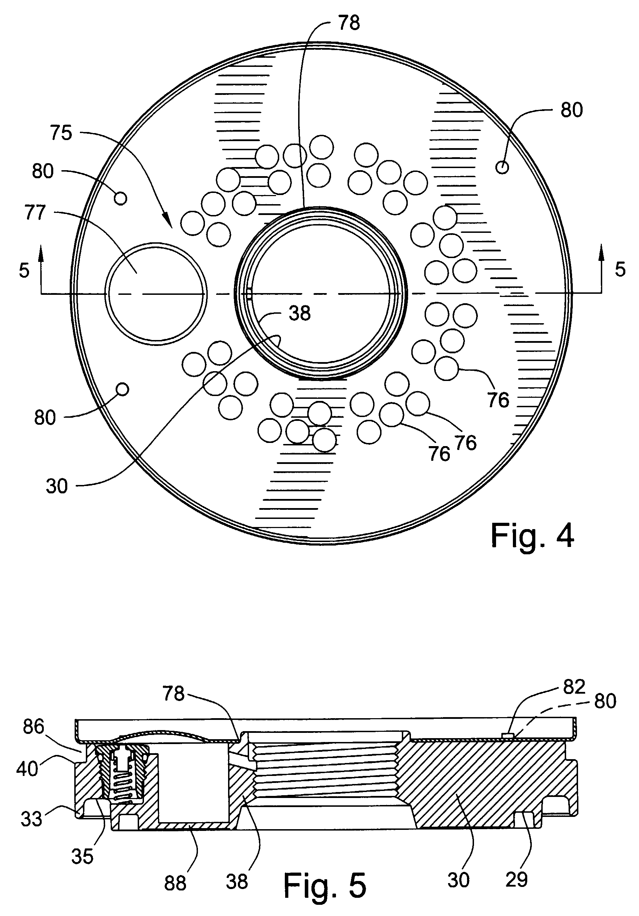

Figure 4 is a plan view of parts of the filter illustrated in figure 1, including the baseplate, relief valve and end plate.
Figure 5 is a cross sectional view of figure 4 taken about line 5-5.
Figure 6 is an exploded perspective view of the parts illustrated in figure 4.
Figure 7 is a similar exploded perspective view as figure 6 but from a different angular perspective.

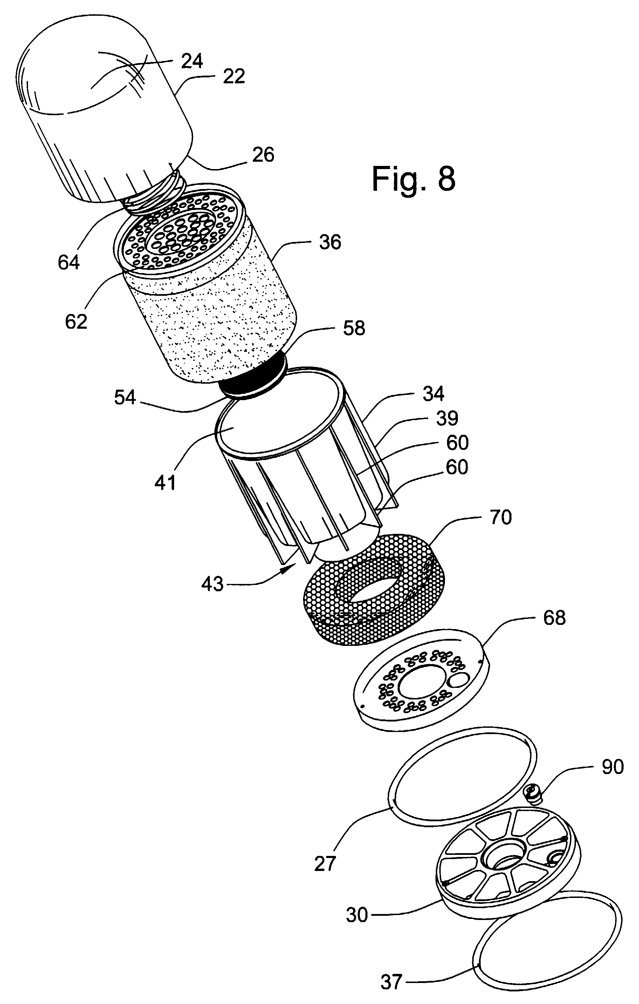

Figure 8 is an exploded perspective view of the parts of the desiccant canister illustrated in figure 1.
Figure 9 is an end view of a desiccant canister according to a second embodiment of the present invention.
Figure 10 is a cross-sectional view of figure 9 taken about line 9-9.
Figure 11 is an enlarged fragmentary cross-sectional view of a portion of figure 10.
Figures 12 and 13 are perspective views of the baseplate used in the desiccant canister illustrated in figure 10.
Figure 14 is an enlarged perspective partially cut-away view of a relief valve assembly used in the desiccant canister embodiments of figures 1 and 10.
Figure 15 is an end view of figure 14.
Figure 16 is a side view of figure 14.
Figure 17 is an alternative embodiment illustrating an alternative way to mount the relief valve of figure 14 into a baseplate. This embodiment is shown in conjunction with a mounting surface of a pneumatic circuit.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

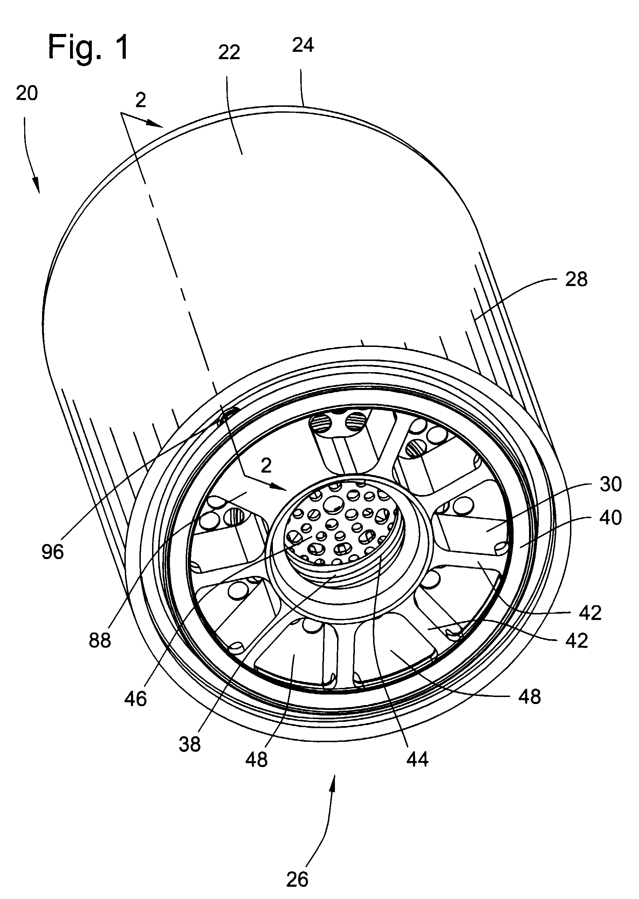

Referring to figure 1, a first embodiment of a desiccant canister 20 is illustrated in accordance with the present invention. The desiccant canister 20 includes an outer shell in the form of an outer canister 22 which may be drawn from relatively heavy gauge steel to include a closed end 24, an open end 26 and a substantially cylindrical sidewall 28. A baseplate 30 is secured to the open end 26 of the canister 22 to generally enclose the internal filter components and provide for connecting to a pneumatic circuit, such as for example, that of a vehicular air braking system (not shown).

In the present embodiment, the baseplate 30 is cast, preferably from aluminium material, to include a central hub 38 and an outer peripheral rim 40 joined to the hub 38 by a plurality of ribs 42. The central hub 38 provides threads 44 such that the desiccant canister 20 is of the spin-on type capable of being threadingly connected to a pneumatic circuit. The hub 38 provides a central opening which in the present embodiment serves as a central outlet port 46 for returning dried air to a pneumatic circuit. Radially about the hub 38 and between the ribs 42, there is provided a plurality of openings which in the present embodiment serve as inlet ports 48 for receiving compressed or "wet" air. Between two of the ribs 42, there is provided an enclosed space provided by a barrier wall 88 and pressure relief mechanism 96 which will later be described in greater detail.

The baseplate 30 is secured to the canister 22 by hemming the free end 31 of the canister sidewall 28 over the baseplate 30 to form a mechanical lock between the baseplate 30 and the canister 22. The hemming operation does not require complex deformation of the sheet steel of the canister 22 and therefore heavier than normal gauge steel can be used to provide the desired strength requirements while maintaining a secure connection between the baseplate 30 and the canister 22. This improves the strength and integrity of the desiccant canister 20 in high pressure pneumatic applications where failures in the canister or connection between the baseplate and seaming lid can be catastrophic. In the currently preferred embodiment, the free end 31 is deformed radially inward over an annular support shoulder 33 and into a groove 35 which receives the hemming tool and allows the free end to be compressed against the inner peripheral surface of the shoulder 33. A groove 86 may be provided in the baseplate 30 and in this case by a combination of the baseplate 30 and bottom plate 68 for receiving an inner gasket seal 27 which is compressed against the canister 22 to prevent fluid escape between the canister 22 and the baseplate 30. An outer gasket groove 29 is also provided in the baseplate 30 for receiving an outer O-ring gasket 37 which provides a sealing function between the desiccant canister 20 and a mounting surface of the air circuit to which the desiccant canister 20 connects.

The strength of the baseplate 30 is preferably controlled by adjusting the number, size, width and length of the ribs 42 such that a predetermined maximum system pressure high pressure magnitude in the canister 22, the ribs 42 will bend allowing pressure to be relieved by extruding the O-ring gasket 37 outward and allowing air to escape between the baseplate 30 and a mounting surface of the fluid circuit which the filters 20 connect. This provides a fail safe safety feature which serves to backup other safety features such as the pressure relief valve. The ribs 42 are designed to bend and relieve pressure by extruding the gasket before the pressure at which would cause failure in the canister 22 or in the hemmed connection.

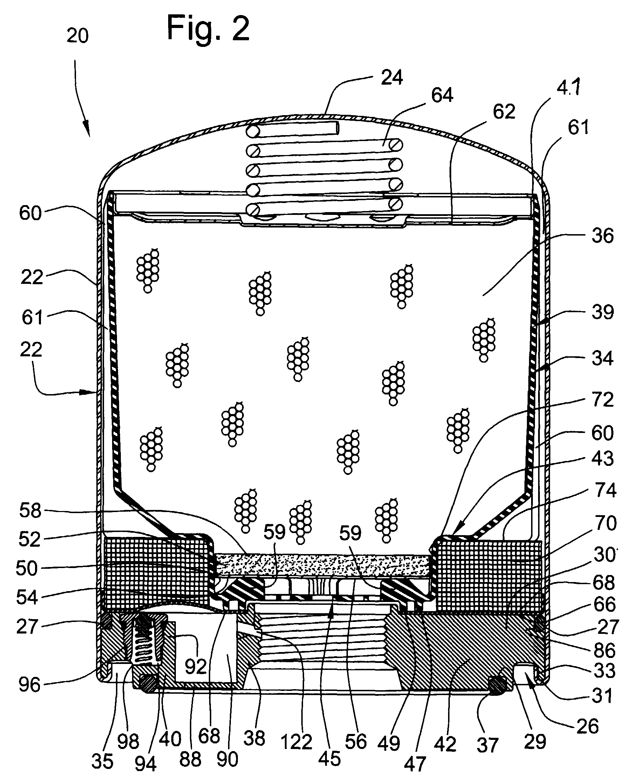

The baseplate 30 and the canister 22 generally house an inner shell in the preferred form of a moulded plastic container 34 which contains a tightly packed mass of air desiccant pellets 36 therein (the pellets being shown schematically in the drawings) for removing moisture from the air flowing through the desiccant canister 20. Referring to figure 2, the container 34 includes a substantially cylindrical sidewall 39 having an open end 41 and a substantially closed end 43 which includes a central perforated portion 45 to allow airflow therethrough for communication with the outlet port 46. The perforated portion 45 is inside a pair of concentric rings 47, 49 integrally formed on the bottom outside of the container which serve as axial seals to prevent air flow from shorting from the inlet ports 48 to the outlet port 46. A separate rubber gasket (not shown) may also be inserted between the rings 47, 49 to better prevent air leakage therebetween if desired. The closed end portion 43 also includes a cavity 50 which closely receives a dust filter 52 therein for removing dust in dried air resulting from rubbing and relative movement between desiccant pellets 36 caused by vibrations and air pressure pulses and fluctuations. The dust filter 52 removes the small desiccant particles that could otherwise cause damage or wear to the pneumatic circuit which the desiccant canister 20 connects. The dust filter 52 may include a retainer cup 54, which may be a metal component, having a perforated bottom 56 with apertures preferably smaller than the size of the pellets 36 and includes a filter media such as a fabric pad 58 or other suitable filtering media with openings sufficiently small to prevent most desiccant dust from exiting the desiccant canister 20, but large enough to prevent being unduly restrictive. In the currently preferred embodiment, the dust filter 52 is supported on thicker rib portions 59 of the container 34 which surround the perforated portion 45 such that axial forces are transmitted more directly to the rings 47, 49 to minimize force on the central perforated portion 45 of the container 36. The inner container 34 preferably includes a plurality of radially outwardly directed fins 60 which serve to locate the inner container 34 radially inside the outer canister 22 and also provide a support function preventing the inner container 34 from expanding outward during pressure pulses. Air passageways 61 are located between adjacent fins 60 and generally between the outer peripheral surface of the container 34 and the inner surface of the canister 22 for communicating air axially through the desiccant canister 20.

A perforated top end plate 62 having apertures smaller than the size of the pellets 36 is provided at the open end 41 of the container 34 to retain the pellets 36 in the container 34. In the currently preferred embodiment, the perforated end plate is slidably received into the open end 41 to engage the pellets 36. A spring 64 is compressed between the closed end 24 of the canister 22 and a recess 66 in the end plate 62 such that the end plate 62 exerts force on the pellets 36 to keep the pellets 36 in a compact arrangement. Advantageously, this prevents the creation of large air gaps in the bed of desiccant pellets 36 and minimizes the amount of rubbing between adjacent pellets in the desiccant bed.

The spring 64 also keeps the container 34 in engagement against a bottom end plate 68 which seats against a recess or seating surface 66 of the baseplate 30. A ring shaped coalescer 70 is situated between the bottom end plate 68 and the container 34 for preventing large water particles which could otherwise cake the pellets 36 as well as airborne oil particles which may be produced by the compressor of the air braking system that could otherwise inhibit the water absorbency of the pellets 36. The coalescer 70 typically comprises wire mesh or other suitable media which removes large contaminants and specifically larger oil and water contaminants from coming in contact with the pellets 36. It is also acceptable to locate a coalescer external to the desiccant canister 20 in the air braking system if so desired rather than in the filter itself. The container 34 is configured to engage the coalescer 70 with an external corner 72 and the bottom end plate 74 engaging the coalescer 70 to ensure that the inlet air flow is directed through the coalescer 70 and does not bypass the coalescer.

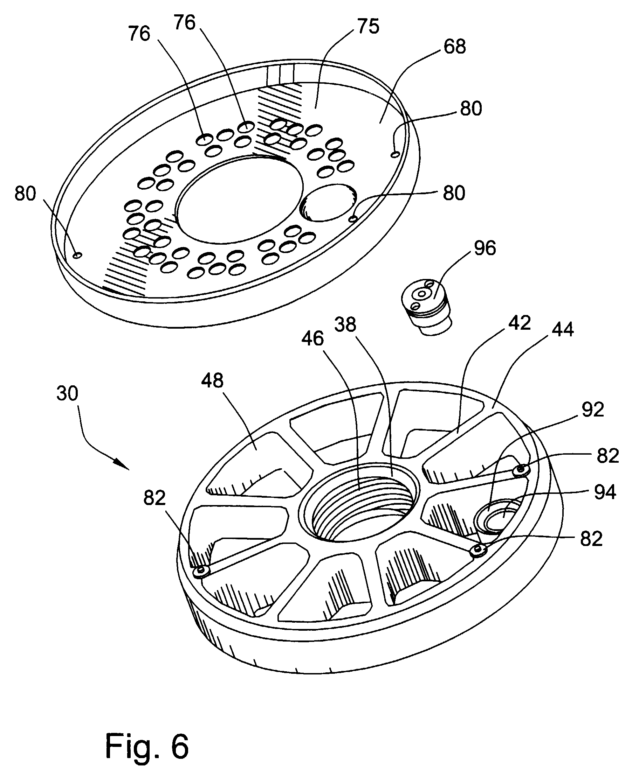

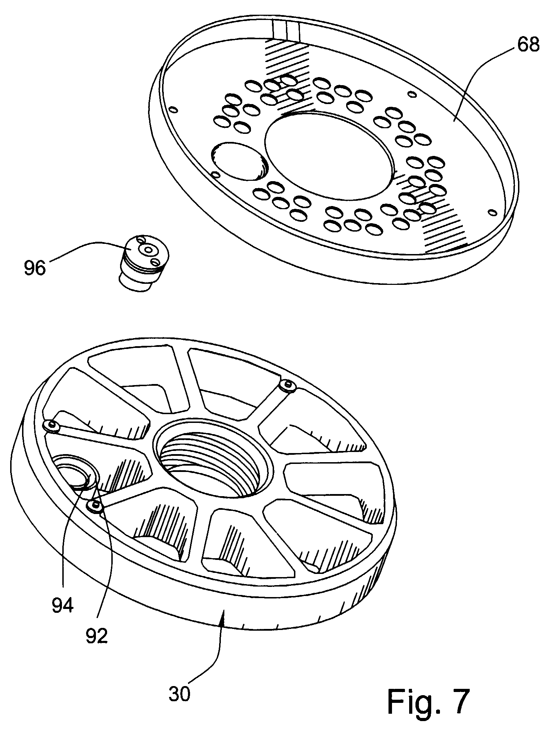

The bottom end plate 68 includes a plurality of apertures 76 in fluid communication with the inlet ports 48 of the baseplate 30 to allow air to flow into the desiccant canister 20. The bottom end plate 68 also includes a central opening 78 in fluid communication with the outlet port 46 of the baseplate 30 to allow air to flow out of the desiccant canister 20. The central opening 78 is located over a location ring of the baseplate 30 for alignment. The end plate 68 also includes at least one location hole 80 that receives a corresponding cast tab 82 in the baseplate 30 or other such fastening means such as a rivet. The importance of locating the end plate will be greater appreciated with later details as to the pressure relief mechanism. However, it can be seen that the end plate 68 includes a solid portion 75 that includes a dimple 77 that encloses a compartment between two adjacent ribs 42 of the baseplate 30. As can be seen in figures 6 and 7, the apertures 76 do not extend all the way around the end plate 68 and the solid portion 84 interrupts the otherwise continuous ring of apertures. The tab 82 may also be deformed to secure the end plate 68 to the baseplate. The combination of the end plate 68 and the baseplate 30 also provides a groove 86 which receives the inner ring gasket 27 if so desired, thereby eliminating the need for a separate radial groove in the baseplate 30.

In practicing the invention, the cast baseplate with integral hemming rim has a region between the outer periphery of the rim and the outer gasket 37 available for carrying a pressure relief valve, and such a valve is mounted within an aperture in the baseplate in a secure, protected orientation. The outer groove 35 between the support shoulder 33 and the outer gasket 37 serves as a channel to evacuate air and also protects the relief port 98 from obstructions.

In accordance with the present invention, the desiccant canister 20 of the first embodiment includes an improved relief mechanism. In this embodiment, the relief mechanism is self contained or protected by the filter itself In the current embodiment, the relief mechanism is situated between two adjacent ribs 42 of the baseplate 30 in a compartment 90 enclosed by the solid portion 75 of the bottom end plate 68 and a solid barrier 88 covering the space between the two adjacent ribs 42 of the baseplate 30. The barrier 88 is integrally formed into the baseplate 30 and is a relatively thin wall such that the bending strength of the baseplate 30 is still primarily determined by the sizing of the ribs 42. This maintains the above mentioned safety feature of the selective sizing of the ribs 42 in the baseplate 30 to control the pressure at which the baseplate bends.

The baseplate 30 includes a pressure relief valve mounting aperture which in the current embodiment is provided by a mounting member 92 enclosed inside the compartment 90. The mounting member 92 has a cavity 94 for receiving a pressure relief valve 96. Mounting the relief valve 96 into the cavity in the baseplate 30 provides a highly protected valve location which is better protected from the external environment and which in turn increases the reliability of the safety feature provided by the relief valve 96. At this point, it will be appreciated that the dimple 77 in the end plate 68 ensures fluid communication between the compartment 90 and the pressure relief valve 96. The cavity 94 may be most easily cast into the baseplate 30 to provide an economical way to mount the relief valve 96. The mounting member 92 includes a relief port 98 which connects the cavity 94 to the external atmosphere at a point beyond the outer O-ring gasket 37. Preferably, the cavity 94 and relief port 98 are vertically disposed when the desiccant canister 20 is secured to an air braking circuit such that any water in the cavity 94 normally drains through gravity out the relief port 98, thereby eliminating potential ice plugging under cold conditions. The relief port 98 is also protected by being located in the external groove 35 in the baseplate which assists in preventing slush and ice from being splashed into the cavity 94. By housing the relief mechanism internal between ribs 42, the relief mechanism is generally protected from the external environment, and similarly prevents slush and ice from splashing into the relief mechanism and causing problems.

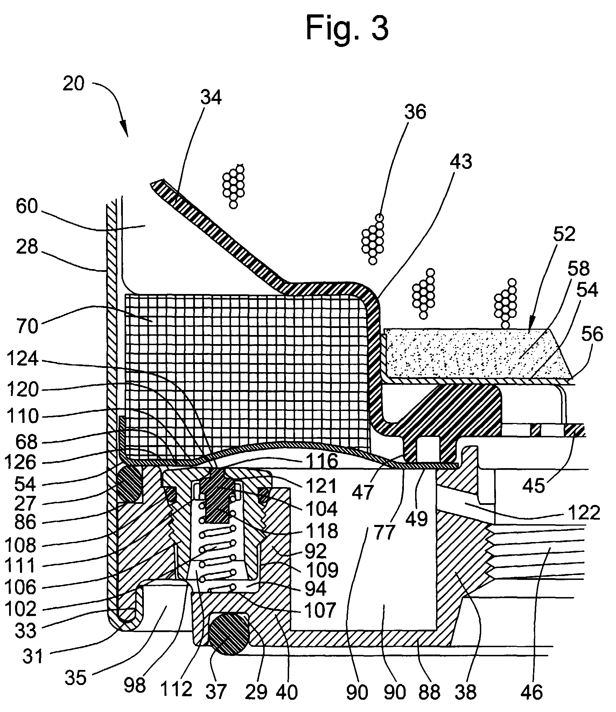

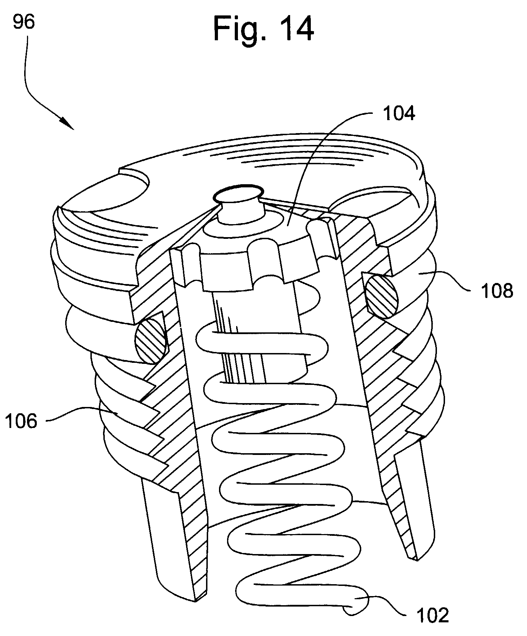

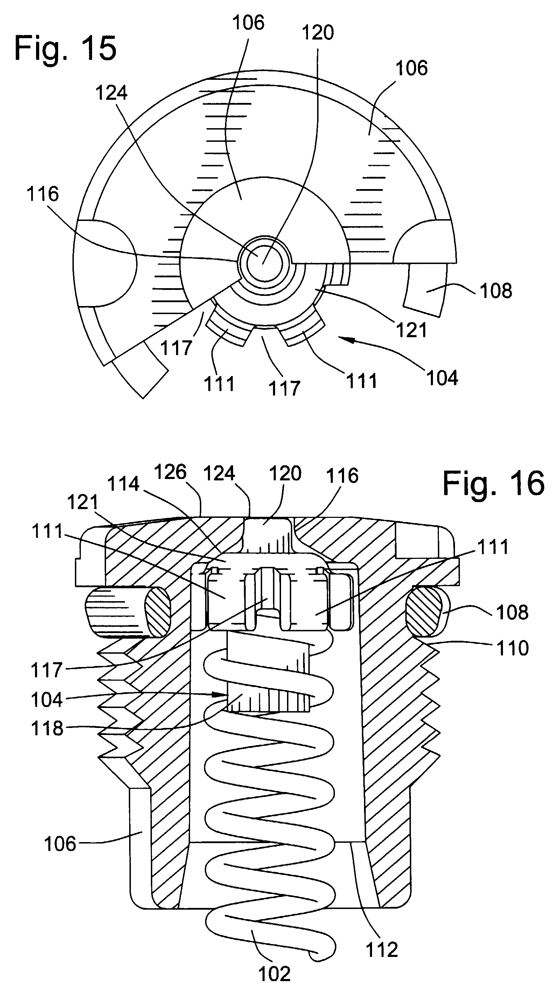

With reference to figures 3, and 14-16, the relief valve 96 comprises a compression spring 102, a plunger 104 and a valve body 106. The spring 102 engages the plunger 104 and is supported by a base 107 of the cavity 94. In this embodiment the relief port 98 exits at a corner between the base 107 and sidewall 109 of the cavity 94. The filter relief pressure can be determined by the spring coefficient and the uncompressed length of the spring 102 and is substantially independent of temperature effects, thereby providing a reliable relief pressure. The valve body 106 includes an outer surface which is closely received into the cavity 94 of the mounting member 92 to locate the relief valve 96 to the baseplate 30. The valve 96 also includes an outer O-ring gasket 108 seated in a radial groove 110 which is compressed against the inner surface of the cavity 94 to prevent escape of air pressure as well as serve as a securing or retaining function by providing a resistance fit which keeps the valve 96 situated in the cavity 94. The valve body 106 may be alternatively or additionally secured in the cavity 94 by such means as a threaded connection, a press fit, a weld, adhesive or other such means as appropriate. In the current embodiment, the end plate 68 exerts force on the valve body 106 to help retain the relief valve 96 in the cavity 94. The valve body 106 has an internal chamber 112 that is relieved to the external atmosphere via the relief port 98 and which houses the spring 102 and the plunger 104. The valve body 106 includes a valve seat 114 having an opening 116 for allowing excessively high air pressure inside of the desiccant canister 20 to escape to the atmosphere. The spring 102 is coaxially filled over a stem portion 118 of the plunger 104 and urges the plunger 104 against the valve seat 114 to prevent air from exiting the desiccant canister 20. This helps to keep the plunger 104 aligned in the valve body 106. The plunger 104 includes a plurality of locating fins 111 which also assists to keep the plunger 104 aligned in the internal chamber 112 and also provides air passages 117 that serve to allow airflow thereby to communicate relieved air to the relief port 98.

In accordance with an aspect of the present invention, the plunger 104 includes a smaller diameter plug portion 120 which extends up into the hole 116 in addition to a larger diameter portion 121 which is contoured to sealingly engage and seat against the valve seat 114. The plug portion 120 is closely sized to the size of the hole 116 such that the plug portion 120 substantially fills the hole 116, thereby minimizing the void space at the top of the hole 116. Preferably, the end 124 of the plug portion 120 lies substantially flush with the top 126 of the cast mounting member 92 to avoid formation of a cavity which would otherwise tend to collect contaminants including water and oil. One advantage is that this configuration prevents water, ice, oil and other contaminants from being deposited in the hole 116 when the plunger is seated against the valve seat 114. This better prevents the relief valve 96 from freezing up and being inoperable under low temperature conditions. The plug portion 120 is sized smaller than the hole to provide a small gap which allows air to exert pressure on the larger diameter portion 121 of the plug. This also ensures that the plug portion 120 is received back into the hole 116 after a pressure release. The alignment functions of the stem portion 118 and the fins 111 of the valve plunger 114 also serve to ensure that the plug portion 120 is reliably received back into the hole 116.

As can be seen, the throat of the hole 116 is relatively short which provides operating advantages. In particular, by keeping the throat of the hole 116 relatively short, a relatively small pressure differential can exist between the cracking pressure and the full relief pressure. At initial cracking, the plug portion 120 of the plunger 104 is still partially in the hole 116 and thus serves to restrict airflow. As pressure increases, the plunger 104 opens further to relieve air faster. This allows the valve 96 to relieve only as much pressure as necessary. As the pressure drops, the plug portion 120 of the plunger 104 will return to the hole 116 and allow the excess pressure to bleed away at a slower rate.

In accordance with another aspect of the present invention, the relief valve 96 and mechanism is connected to the outlet port 46 of the desiccant canister 20 where the air is drier and has already been dried by the pellets 36 in the container 34. To accomplish this in the first embodiment, a passageway 122 is provided in the hub 38 of the baseplate 30 to provide an enclosed passage connecting the outlet port 46 to the relief valve 96 and communicate the dryer air to the relief valve 96 rather than the wetter air at the inlet ports 48. The air at the outlet port 46 is also substantially free of small oil particles having travelled through the coalescer 70 and desiccant pellets 36. Advantageously, this better prevents the possibility of water, oil and other contaminants from building up or depositing at the relief valve 96.

During normal operation, wetter compressed air flows into the filter 22 through the inlet ports 48, through the coalescer 70 to remove water or oil droplets and contaminant particles, through a plurality of axial air passageways 61 and into a chamber at the closed end 24 of the filter where it is redirected into and axially through the bed of desiccant pellets 36, through the dust filter 52 which is downstream of the bed of desiccant pellets 36 to collect desiccant dust, and to the outlet port 46. It is usually desirable to periodically reverse the air flow through the desiccant canister 20 such that compressed, dried air flows from outlet port 46 to the inlet ports 48. This is typically done to flow drier air over the pellets 36 and evaporate water from the desiccant pellets 36 thereby recharging the water holding capacity of the pellets. As such, it will be understood that the terms outlet and inlet ports refer to the manner at which wetter air flows through the desiccant canister 20.

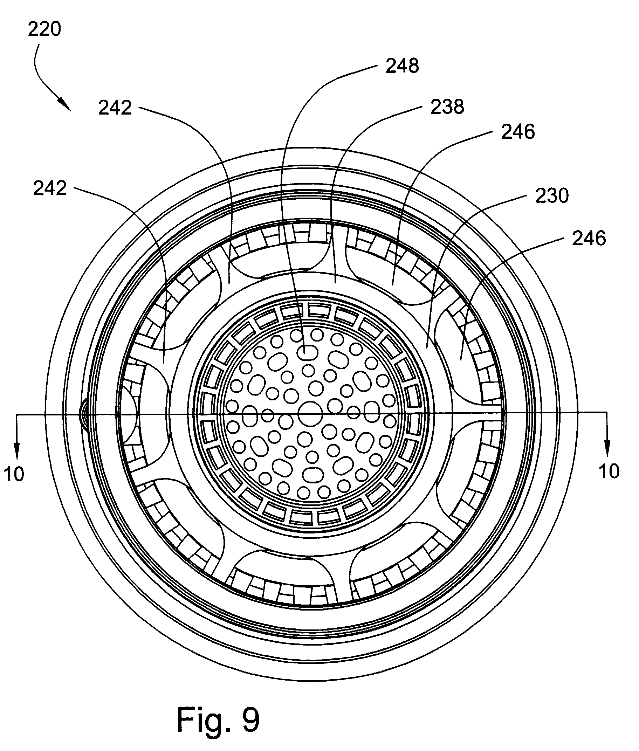

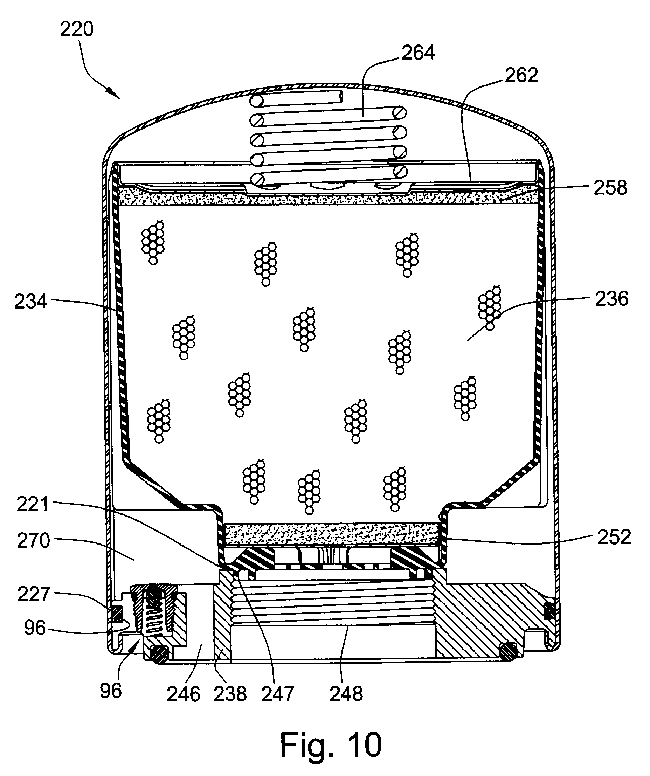

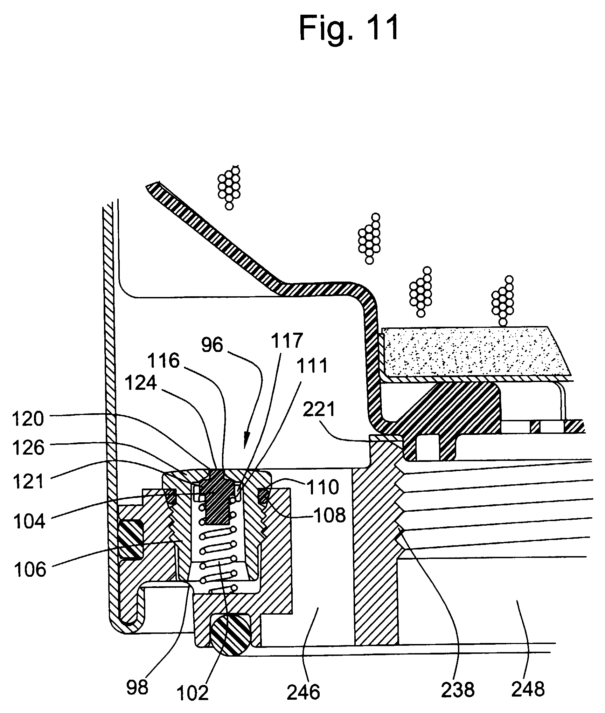

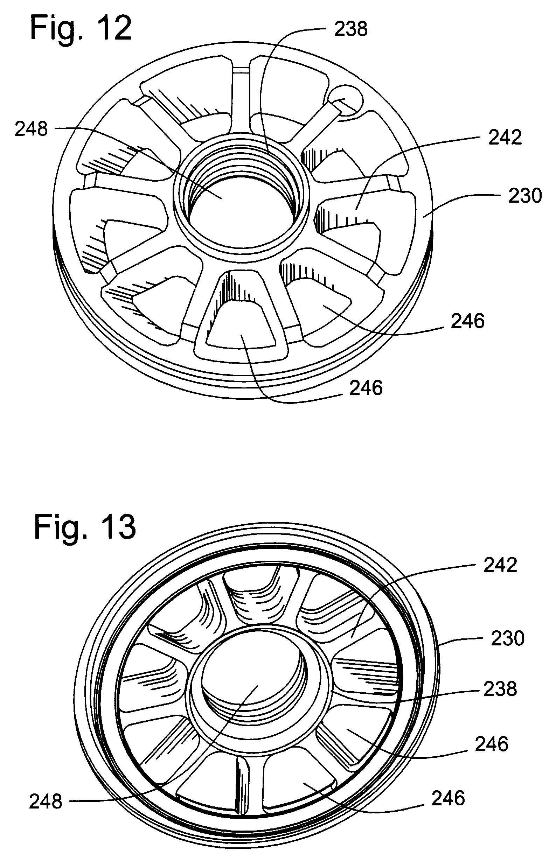

Turning to figures 9-13, a second embodiment of a desiccant filter 220 is illustrated. It will be appreciated that the operation of this embodiment is similar to that of the first embodiment and will be understood with reference to the first embodiment and therefore only certain aspects of this embodiment will be discussed. In this embodiment, the location of the inlet and outlet ports is reversed, namely, the inlet port 248 for receiving wetter air is located inside the hub 238 of the baseplate 230 while the outlet ports 246 are located radially about the inlet port 248 between the ribs 242 of the baseplate 230. Because drier air naturally occurs at the outlet ports 246 between the ribs 242, there is no need to provide a separate enclosed compartment between ribs and a fluid passageway through the hub.

Also it can be seen that this embodiment does not include a coalescer. A coalescer may be provided in the air braking system or alternatively between the inlet port 248 and the bed of desiccant pellets 236 of the filter 220. This embodiment also includes a dust filter 258 downstream of the bed of desiccant pellets 236, but in this case, the dust filter 258 is located between the top end plate 262 and the desiccant pellets 236. The dust filter 258 prevents desiccant dust from flowing to the outlet ports. In this case, the dust filter 258 comprises a pad of suitable filtering media. Alternatively, the downstream dust filter 258 could be located outside of the container 234, for example, in a cavity 270 which housed the coalescer in the first embodiment. This embodiment also shows an upstream dust filter 259 which can remove desiccant dust when air flow is reversed to dry out the pellets 236.

It is also noteworthy that the inner container 234 is seated on a shoulder 221 of the baseplate hub 238. Air entering the inlet port 248 may axially act on the container 234 against the spring 264. The force of the spring 264 is sufficiently high to maintain engagement between the container 234 and the baseplate 230 and thereby providing an axial seal. The outer ring 247 also limits the ability of air to short past the bed of desiccant pellets 236. Also noteworthy is that a groove 286 is formed in the baseplate 230 (either during casting of subsequent machining) to receive the inner gasket 227.

The second embodiment also demonstrates a protected relief valve 96 that is connected into the baseplate 230 in a similar manner as the first embodiment and which operates in a similar manner to the relief valve 96 of the first embodiment and therefore will not further be discussed. When viewing the embodiments, it will be appreciated that minimal tooling modifications are necessary to switch the respective locations of the inlet and outlet ports. In particular, the location of the relief valve and mounting member cast into the baseplate is the same for both embodiments thereby achieving a customizable filter to meet the various different braking system arrangements.

Advantageously the relief valve is subject to dried air simply by selectively enclosing or opening the space between the ribs depending upon the locations of the inlet and outlet ports.

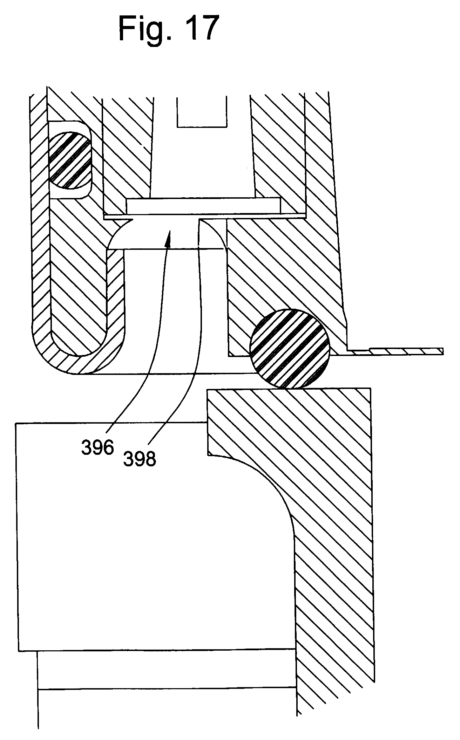

The embodiment of figure 17 illustrates a slightly different mounting configuration for the relief valve 396. The relief port 398 exits through the base 407 of the cavity 394 rather than through the corner. The relief valve 396 is also located further radially outward as compared to the previous two embodiments.

Although a single pass through the desiccant bed is shown, it will also be appreciated that the novel aspects of the present invention can also be incorporated into a multiple pass type desiccant canister, such as that disclosed in U.S. Patent Application Serial No. 09/442,205, entitled "Air desiccant canister", by the same inventors and assigned to the same assignee, the entire disclosure of which is hereby incorporated by reference by its entirety.

All of the references cited herein, including patents, patent applications and publications are hereby incorporated in their entireties by reference. While this invention has been described with an emphasis upon preferred embodiments, it will be obvious to those of ordinary skill in the art that variations of the preferred embodiments may be used and that it is intended that the invention may be practiced otherwise than as specifically described herein. Accordingly, this invention includes all modifications encompassed within the spirit and the scope of the invention as defined by the following claims.

## Claims

1. A desiccant dryer in the form of a spin-on desiccant canister for an air brake system, comprising:
a baseplate (30) including a central hub (38), an outer peripheral rim (40) surrounding the hub (38), and a plurality of radially extending ribs (42) connecting the hub (38) and the rim (40), the central hub (38) defining a threaded central opening for spin-on connection to the air brake system, the central threaded opening providing a central port (46) for fluid communication with the air brake system, a plurality of peripheral ports (48) defined between the hub (38), the ribs (42) and the peripheral rim (40);
an outer ring gasket (37) provided on the peripheral rim (40);
a canister (20) having a closed end (24), an open end (26) and a generally cylindrical sidewall (28) therebetween, and edge of the cylindrical sidewall (28) secured to the baseplate (30) at the open end (26);
a desiccant bed in the outer shell for drying air flow between the central port (46) and the peripheral ports (48); and
a pressure relief valve (96) mounted in the baseplate (30) between the ring gasket (37) and the edge of the cylindrical sidewall (28).

2. A desiccant dryer in accordance with claim 1 characterized in that the baseplate (30) includes an exhaust groove (35) in the peripheral rim (40) at least partially surrounding the outer ring gasket (37), the pressure relief valve (96) adapted to exhaust into the exhaust groove (35).

3. A desiccant dryer in accordance with claim 2 characterized in that the outer peripheral rim (40) includes an annular wall (33) surrounding the exhaust groove (35), the edge (31) of the side wall (28) being hemmed to the wall (33).

4. A desiccant dryer in accordance with any of claims 1 to 3 characterized in that the baseplate (30) is cast aluminium, the ribs (42) have a selected strength characteristic such that at a predetermined maximum air pressure in the canister, the ribs (42) bend sufficiently for allowing air to pass along the outside of the baseplate (30) past the ring gasket (27), the predetermined maximum air pressure being greater than the pressure at which the relief valve (96) opens but less than the pressure at which the desiccant canister bursts.

5. A desiccant dryer in accordance with any of claim 1 to 4 characterized by an internal desiccant container (34) in the canister (20) including a base (43) proximate the baseplate (30) and a tubular sidewall (39) extending from the base, the desiccant bed including a particulate desiccant medium (36) substantially filling the desiccant container;
an air passageway through the desiccant canister communicating air between inlet and outlet ports (48, 46) including:
a first flow passage through the desiccant bed in one axial direction, and
a second flow passage (61) around the desiccant bed in the other axial direction, the second flow passage (61) between the desiccant container (34) and the canister (20).

6. A desiccant dryer in accordance with claim 5 characterized by a coalescer (70) and a dust pad, the dust pad (52) disposed in the first flow passage, the coalescer (70) disposed in the second flow passage (61).

7. A desiccant dryer in accordance with any of claims 5 or 6 characterized by a baffle plate (62) slidable in the desiccant container (34); and a spring (64) supported by the closed end (24) urging the baffle plate (62) against the base (43) to compress the desiccant medium.

8. A desiccant dryer in accordance with any of claims 1 to 7 characterized by a dedicated flow passageway (122) bypassing the desiccant bed, connecting the relief valve (96) to the central port (46).

9. A desiccant dryer in accordance with any of claims 1 to 8 characterized in that the pressure relief valve (96) includes
a valve body (106) defining a valve chamber (112), having an inlet opening (116) exposed to the inside of the desiccant dryer and a relief outlet (98) exposed the external environment;
a valve plunger (104) movable in the valve chamber (112) between a closed position wherein the plunger (104) prevents passage of air between the inlet opening (116) and the relief outlet (98) and an open position wherein the plunger allows passage of air between the inlet opening (116) and the relief outlet (98); and
a spring (102) urging the plunger (104) towards the closed position.

10. A desiccant dryer in accordance with claim 9 characterized in that the plunger (104) includes a plug portion (120) projecting into the inlet opening (116) in the closed position.

11. A desiccant dryer in accordance with any of claims 9 or 10 characterized in that the plunger (104) includes a plurality of radially projecting fins (111) adapted to contact the valve body (106) to locate the plunger (104) inside the valve body (106), air passages (117) from the inlet opening (116) to the relief outlet (98) being formed between adjacent fins (111) in the open position, the plunger (104) sealing against the valve body (106) along a circular contact (114) beneath the inlet opening.

12. A desiccant dryer in accordance with any of claims 9 to 11 characterized in that the baseplate (30) defines a cavity (94) receiving the relief valve (96), the cavity (94) including a bottom surface (107) supporting the spring (102).

13. A desiccant dryer in accordance with any of claims 9 to 12 characterized by a ring gasket (108) compressed between the valve body (106) and the baseplate (30).

14. A method for preventing excessive pressure build up inside a desiccant dryer for an air brake system, the desiccant dryer comprising a housing including an outer canister (20) and a baseplate (30) connected to the canister (20), the baseplate (30) including an inlet port (48) and an outlet port (46) adapted to connect to an air brake system, and a desiccant bed arranged in the housing for removing water from air, comprising:
arranging a pressure relief valve (96) on the housing, the pressure relief valve (96) having an inlet (116) internal to the housing and an outlet (98) external to the housing;
relieving pressure in housing upon reaching a predetermined excessive pressure through the pressure relief valve (96).

15. A method in accordance with claim 14 further comprising mounting the pressure relief valve (96) in the baseplate (30).

16. A method in accordance with claim 14 further comprising fluidically connecting the pressure relief valve (96) directly to the inlet side of the desiccant bed.

17. A method in accordance with claim 14 further comprising providing a threaded opening on the baseplate (30) such that the desiccant dryer is of the spin-on type.
